Europäisches Patentamt

European Patent Office

Office européen des brevets

(19)

(11) Veröffentlichungsnummer : **0 009 015**
**B2**

(12) **NEUE EUROPÄISCHE PATENTSCHRIFT**

(45) Veröffentlichungstag der neuen Patentschrift :
19.10.88

(21) Anmeldenummer : 79890022.1

(22) Anmeldetag : 16.07.79

(51) Int. Cl.⁴ : **B 29 C 65/18**

(54) Schweissvorrichtung in Form eines Handgerätes für Bahnen oder Plachen aus thermoplastischem Material.

(30) Priorität : 20.07.78 AT 5281/78

(43) Veröffentlichungstag der Anmeldung :
19.03.80 Patentblatt 80/06

(45) Bekanntmachung des Hinweises auf die Patenterteilung : 10.11.82 Patentblatt 82/45

(45) Bekanntmachung des Hinweises auf die Entscheidung über den Einspruch : 19.10.88 Patentblatt 88/42

(84) Benannte Vertragsstaaten :
BE CH DE FR GB IT LU NL SE

(56) Entgegenhaltungen :
BE-A- 670 215
CH-A- 582 054
DE-A- 1 958 989
DE-A- 2 700 971
DE-B- 1 192 813
DE-U- 7 404 530
DE-U- 7 509 275
FR-A- 1 500 570
US-A- 2 556 476
US-A- 3 166 458

(73) Patentinhaber : ISO-Bau Gesellschaft m.b.H
Weyrgasse 5
A-1031 Wien (AT)
CH DE GB IT LU SE
TEERAG-ASDAG Aktiengesellschaft
Marxergasse 25
A-1031 Wien (AT)
BE FR NL

(72) Erfinder : Winkler, Werner
Wehlistrasse 131/10/1
A-1200 Wien (AT)

(74) Vertreter : Köhler-Pavlik, Johann, Dipl.-Ing.
Margaretenplatz 5
A-1050 Wien (AT)

EP 0 009 015 B2

Jouve, 18, rue St-Denis, 75001 Paris, France

## Beschreibung

Die Erfindung betrifft eine Schweissvorrichtung in Form eines Handgerätess für Bahnen oder Plachen aus thermoplastischem Material, mit einem motorisch angetriebenen Druckrollenpaar, das an einer im Querschnitt S-förmigen, gegebenenfalls mit Laufrollen ausgestatteten Halte- und Führungsvorrichtung derartig gelagert ist, dass eine Rolle mittels eines schwenkbaren Halteteils im Abstand zur anderen Rolle verstellt werden kann, und einem dem Druckrollenpaar vorgelagerten Heizkörper.

Für Dichtungszwecke werden in bestimmten Fällen, so z. B. im Tunnelbau, oder bei Flachdächern usw., Bahnen oder Plachen aus thermoplastischem Kunststoff verwendet. Die etwa 2 bis 3 m breiten Bahnen werden hierbei mittels einer Schweissvorrichtung zusammengeschweisst, damit grössere Flächen bedeckt werden können. Bei den allgemein in Verwendung stehenden Schweissvorrichtungen müssen hiezu die Enden der beiden zu verschweissenden Bahnen im rechten Winkel aufgestellt werden, damit sie zu einer Stehnaht verschweisst werden können. Die Schweissvorrichtung wird hiebei von einem Bedienungsmann gehalten und geführt, während eine zweite Kraft die Bahnen rechtwinkelig aufstellt und aneinanderfügt. Diese Schweissvorrichtung wiegt schwer und ist dadurch besonders bei senkrecht auszuführenden Nähten sehr unhandlich. Weiters weist diese Schweissvorrichtung zwar eine geringfügige Verstellbarkeit des Abstandes der Rollen zueinander auf, welche die Einführung der Bahnen zu Beginn des Schweissvorganges erleichtern soll, jedoch ist diese Verstellbarkeit bei Bahnen unterschiedlicher Materialstärke nicht ausreichend. Durch die Ausführung des Heizkörpers und der beiden Druckrollen werden im Abstand von ca. 2 bis 3 cm zwei Schweissnähte erzeugt, wodurch ein Hohlraum entsteht. Um die Dichtheit dieser Schweissnähte zu überprüfen, wird beispielsweise dieser Hohlraum an einem Ende der beiden Nähte an ein Manometer angeschlossen, während in das andere Ende der Nähte mittels eines Schlauches Druckluft eingeblasen wird. Die Schweissvorrichtung bekannter Art ermöglicht somit nur das Aneinanderfügen von Bahnen mittels einer Stehnaht. Oft ist es erwünscht, quer zu diesen aneinandergefügten Bahnen weitere Bahnen mittels einer sogenannten T-Naht oder Kreuznaht anzuschweissen. Hiebei muss das Ende der Stehnaht zum Teil abgeschnitten werden, um mittels der bekannten Schweissvorrichtung eine Kreuznaht durchzuführen. Die oftmals behördlich vorgeschriebene Dichtigkeit der Naht ist dabei nicht mehr gewährleistet.

Eine weitere Vorrichtung zum Verbinden zweier Bahnen aus thermoplastischem Kunststoff ist in der De-A 1 958 989 beschrieben und besteht aus einer Anpressvorrichtung mit einer unter Federdruck stehenden Rolle, welche an einer im Querschnitt S-förmigen, gegebenenfalls mit Rädern oder Laufrollen ausgestatteten Halte- und Führungsvorrichtung schwenkbar gelagert ist. Diese Vorrichtung ist in erster Linie dazu geeignet, dass mit ihrer Hilfe in einer stationären Fertigungsstätte, z. B. in einer Werkshalle, Kunststoffbahnen zusammengeschweisst werden. Für den mobilen Einsatz unter erschwerten Bedingungen, wie z. B. beim Zusammenschweissen von mehrere Millimeter starken Kunststoffbahnen für Tunnelauskleidungen ist diese Vorrichtung jedoch ungeeignet.

Des weiteren ist in der DE-B-1 192 813 eine Vorrichtung zum Verschweissen von thermoplastischen Kunststoffteilen beschrieben, welche speziell für miteinander zu verschweissende Teile geeignet ist, die stark unterschiedliche Dicken oder Formen haben. Dazu werden die zu verschweissenden Oberflächenschichten zunächst durch direkten Kontakt mit äusseren Heizflächen eines zwischen den zu verschweissenden Oberflächen befindlichen Heizelementes vorgeheizt und unmittelbar darauf durch zwischen die zur Anpressstelle hin zusammengeführten Oberflächenschichten in Richtung zur Anpressstelle hin eingeblasenes heisses Gas auf Schweisstemperatur erhitzt. Die Anpressvorrichtung ist hiebei durch zwei gefederte Rollen gebildet, welche die beiden zwischen ihnen durchlaufenden Kunststoffteile im Bereich der Schweisszone fest gegeneinanderpressen. Auch diese Vorrichtung ist jedoch ebenfalls nur für den stationären Einsatz geeignet.

Ein Schweissgerät der eingangs genannten Art, welches für den mobilen Einsatz vorgesehen ist, wird in der DE-A 2 700 971 beschrieben. In bekannter Weise ist hiebei eine obere und eine untere Schweissführung sowie eine Heizeinrichtung vorgesehen, wobei die Heizeinrichtung als Kontaktheizkörper und die Schweissführung als obere und untere Rollen ausgebildet ist, wobei die untere Schweissrolle über ein Lager und einen Arm mit dem Gehäuse verbunden ist, während die obere Schweissrolle über einen Arm schwingend auf einer oberen Antriebsachse gehalten ist und über eine Blattfeder auf das Schweissgut sowie auf die untere Schweissrolle gepresst wird. Die Achsen der beiden Rollen laufen parallel zueinander.

Aufgabe der Erfindung ist es, die oben erwähnten Nachteile der bekannten Schweissvorrichtung durch eine neue Schweissvorrichtung zu beheben, welche bewirkt, dass die zu schweissenden Bahnen ähnlich wie bei einem Reissverschluss zusammengeführt werden, was mit den bekannten Geräten nicht möglich war und eine störungsfreie vollautomatische Arbeit sichert und zwar unter Beibehaltung der Möglichkeit Flachnähte, die absolute Dichtheit gewährleisten, sowie T-Nähte und Kreuznähte problemlos herzustellen, wobei auch der Anpressdruck unabhängig von der Materialstärke einstellbar sein soll.

Die Erfindung, wie sie im Anspruch 1 gekennzeichnet ist, löst diese Aufgabe.

Die erfindungsgemässe Schweissvorrichtung gestattet die Ausführung qualitativ hochwertiger Doppelnähte. Weiters zeichnet sich die erfindungsgemässe Schweissvorrichtung durch ihr geringes Gewicht, ihre Handlichkeit und ihre nahezu selbsttätige, d. h. automatische Arbeitsweise.

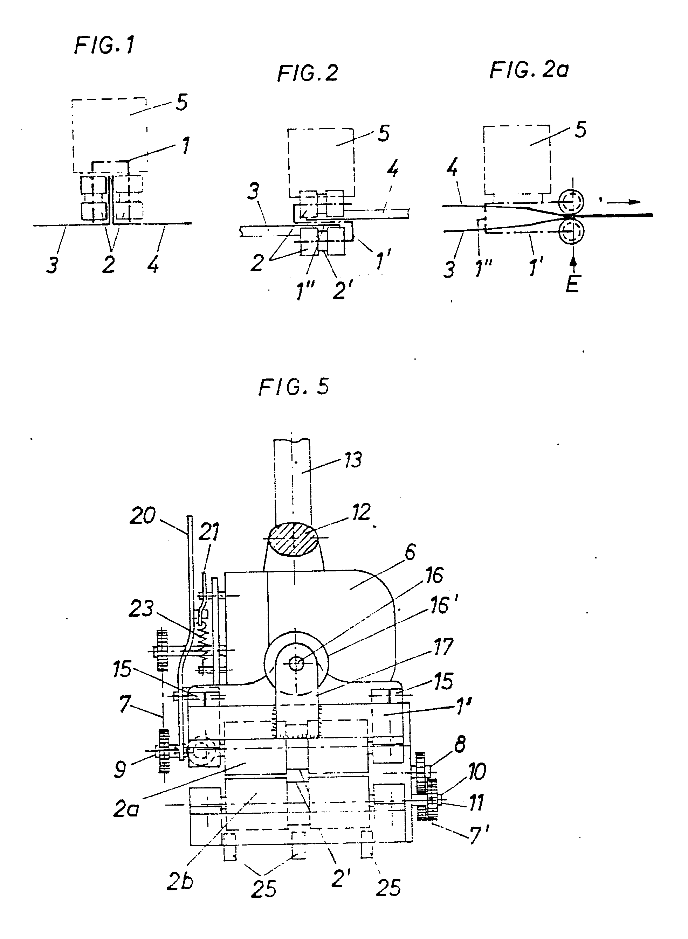

Im folgenden wird die Erfindung anhand eines Ausführungsbeispieles in den Zeichnungen erläutert. Es zeigen Fig. 1 im Aufriss das Prinzip der bekannten erstgenannten Schweissvorrichtung in schematischer Darstellung,

Fig. 2 und 2a im Auf- und Seitenriss das Prinzip der erfindungsgemässen Schweissvorrichtung in schematischer Darstellung und die

Fig. 3 bis 5 ein Ausführungsbeispiel der erfindungsgemässen Schweissvorrichtung in Auf-, Grund- und Seitenriss.

In Fig. 1 ist mit 1 eine U-förmige Haltevorrichtung schematisch dargestellt, an deren Enden sich Druckrollen 2 befinden. Der (nicht dargestellte) Heizkörper erwärmt die aufgestellten Enden der Bahnen 3 und 4, bis diese schmelzen und anschliessend durch die Druckrollen 2 zusammengedrückt und verschweisst werden. Die Antriebsvorrichtung 5 enthält den Antriebsmotor sowie die Steuerungs- bzw. Bedienungselemente für die Betriebsart der Vorrichtung.

Aus Fig. 2 ist ersichtlich, dass die Bahnen 3 und 4 nicht mehr aufgestellt werden müssen, sondern flach aufeinander liegen. Dies wird durch die Gestaltung der Haltevorrichtung 1' ermöglicht. Die aus der Fig. 2 ersichtliche S-förmige Form der Haltevorrichtung 1' gestattet in Verein mit den, mit einer Mittelnut 2' an ihrem Umfang ausgestatteten Druckrollen 2 eine flache Doppelnahtschweissung der Bahn 4 auf der Bahn 3. Die Haltevorrichtung 1' ist starr befestigt, beispielsweise auf einer Arbeitsfläche, und die Bahnen 3, 4 werden durch die Druckrollen 2 selbsttätig eingezogen, oder aber die Haltevorrichtung 1' ist frei beweglich und bewegt sich entlang der Kanten der Bahnen selbsttätig durch den Vortrieb der Druckrollen 2 fort. In der Seitenansicht nach Fig. 2a wird durch die Achsen der Rollen 2 die Ebene E aufgespannt. Die rechtwinkelige Verlängerung der Haltevorrichtung 1' vereinigt sich im Abstand von der Ebene E als Mittelsteg 1" der im Aufriss nach Fig. 2 S-förmigen Haltevorrichtung 1'.

In weiterer Ausgestaltung der Erfindung ist der Abstand der beiden Druckrollen 2 zueinander durch eine Verstelleinrichtung verstellbar, wodurch sich eine Anpassungsmöglichkeit an die Stärke der zu verschweissenden Bahnen ergibt, bzw. der Anpressdruck der Rollen reguliert werden kann. Die Verstelleinrichtung wirkt entweder separat auf eine der beiden Rollen ein oder sie wirkt beidseitig auf beide Rollen gleichzeitig ein. Der Härtegrad der Druckrollen beträgt üblicherweise etwa 60 Shore.

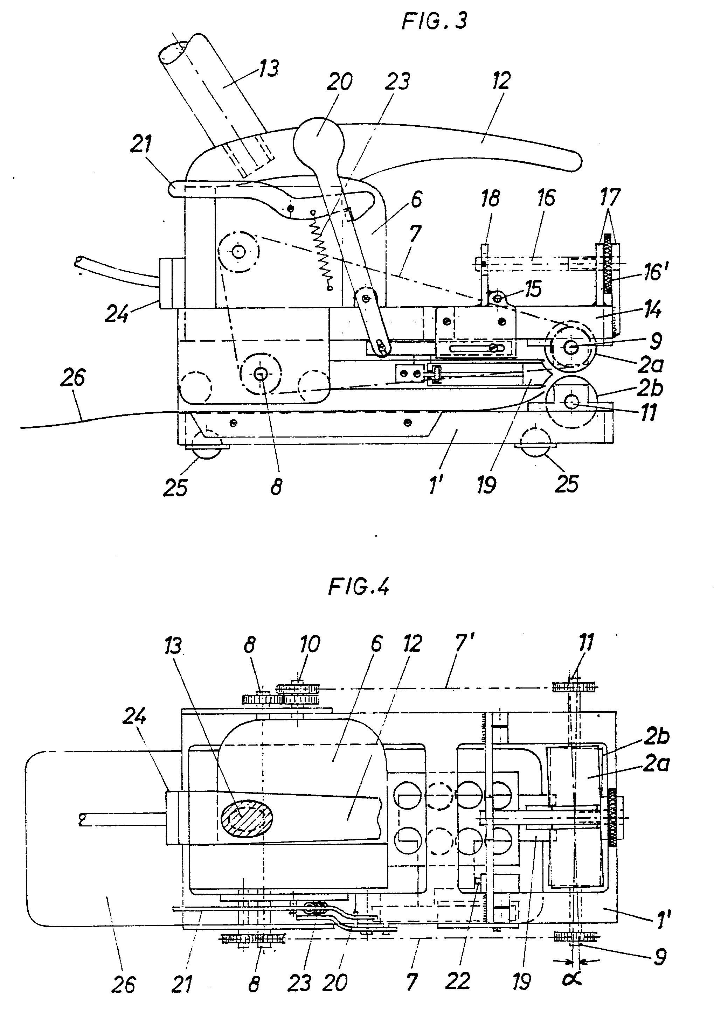

Nach dem Prinzip der erfindungsgemässen Schweissvorrichtung nach den Fig. 2 und 2a wird anschliessend ein Ausführungsbeispiel anhand der Fig. 3 bis 5 beschrieben, mittels welcher Flachnähte sowie T-Nähte und Kreuznähte erzeugt werden können. Auf der Haltevorrichtung 1' ist ein Motor 6 angeordnet, welcher über eine Kette 7 die Achse 8 und die Achse 9 der oberen Druckrolle 2a antreibt. Die Achse 8 treibt über ein Zahnradpaar die Achse 10 an, welche über eine Kette 7' wiederum die Achse 11 der unteren Druckrolle 2b antreibt. Ein Handgriff 12 ermöglicht eine leichte Handhabung und Führung der Vorrichtung. Im hinteren Teil des Handgriffes 12 befindet sich eine Bohrung mit Gewinde, in welche bei Bedarf ein Verlängerungsstock 13 mit Handgriff eingeschraubt werden kann.

Die Achse 11 der unteren Druckrolle 2b ist starr auf der Haltevorrichtung 1' gelagert, während die Achse 9 der oberen Druckrolle 2a im Teil 14 gelagert ist, welcher um ein Scharnier 15 drehbar gelagert mit der Haltevorrichtung 1' verbunden ist, wodurch der Abstand zwischen den beiden Achsen 9 und 11 variierbar ist. Dieser Abstand ist mittels einer Rändelschraube 16' einstellbar, welche auf einem Gewindebolzen 16 zwischen zwei Vorsprüngen 17 läuft, welche auf dem Teil 14 angeordnet sind. Der Gewindebolzen ist am anderen Ende drehbar in einem Vorsprung 18 gelagert, welcher auf der Haltevorrichtung 1' angeordnet ist. Ein im wesentlichen keilförmig ausgebildeter Heizkörper 19 ist mittig vor den Druckrollen 2a und 2b verschiebbar angeordnet, und wird mittels eines Hebels 20 in die Arbeitsstellung nahe zu den Druckrollen 2a und 2b gebracht. Ein Arretierhebel 21 hält den Hebel 20 in dieser Position mittels einer Feder 23 fest. Beim Einrücken des Hebels 20 in die Arbeitslage wird gleichzeitig ein Mikroschalter 22 betätigt, welcher den Heizkörper 19 an die volle Spannung legt. Ist der Mikroschalter unterbrochen, so liegt der Heizkörper 19 beispielsweise nur an halber Spannung, damit letzterer vorgeheizt bleibt. Über den Stecker 24 wird der Schweissvorrichtung elektrische Energie und eventuelle Steuerbefehle (Ein-Aus) übertragen. Für den Fall, dass die Vorrichtung frei beweglich verwendet wird, so befinden sich auf der Unterseite der Haltevorrichtung 1' drei Laufrollen 25. Ein Leitblech 26 erleichtert die Zuführung der unteren Bahn zur unteren Rolle 2b. Die erfindungsgemässe Schweissvorrichtung führt praktisch selbständig den Schweissvorgang aus, sobald sie eingeschaltet wird.

Im dargestellten Beispiel der Erfindung sind die Druckrollen 2a, 2b mit einer Mittelnut 2' ausgestattet und ermöglichen dadurch eine Doppelnaht. Es können auch mehrere Nuten auf den Druckrollen angeordnet sein, um eine Mehrfachnaht zu ermöglichen, welche Dichtheit und Festigkeit der Schweissung erhöht.

Weiters sind im dargestellten Beispiel der Erfindung beide Druckrollen 2a, 2b angetrieben. Natürlich besteht auch die Möglichkeit, nur eine der beiden Druckrollen anzutreiben, wodurch die Konstruktion wesentlich vereinfacht wird.

Im dargestellten Beispiel ist die obere Druckrolle 2a mittels der Verstellvorrichtung (14 bis 18) im Abstand zur unteren Druckrolle 2b verstellbar. Im Rahmen der Erfindung ist ebenso eine separate einseitige oder gleichzeitige Verstellbarkeit der unteren Druckrolle 2b zur oberen Druckrolle 2a bzw. mit dieser möglich.

## Patentansprüche

1. Schweissvorrichtung in Form eines Handgerätes für Bahnen oder Plachen aus thermoplastischem Material, mit einem motorisch angetriebenen Druckrollenpaar (2a, 2b), das an einer im Querschnitt S-förmigen, gegebenenfalls mit Laufrollen (25) ausgestatteten Halte- und Führungsvorrichtung (1') derartig gelagert ist, dass eine Rolle (2a) mittels eines schwenkbaren Halteteils (14) im Abstand zur anderen Rolle verstellt werden kann, und einem dem Druckrollenpaar (2a, 2b) vorgelagerten Heizkörper (19), dadurch gekennzeichnet, dass die Achsen (9, 11) der Druckrollen (2a, 2b) zueinander, sich im Bereich der Schweißnahtmittelachse und symmetrisch zu dieser Kreuzend, um einen Winkel von 1 bis 3° in der zu den Bahnen (3, 4) parallelen Ebene versetzt sind.

2. Schweissvorrichtung nach Anspruch 1, dadurch gekennzeichnet, dass jede Druckrolle (2a, 2b) zumindest eine Nut (2') an ihrem Umfang aufweist.

3. Schweissvorrichtung nach Anspruch 1, dadurch gekennzeichnet, dass die Änderung des Rollenabstandes durch Verstellung einer Rändelmutter (16') auf einem Gewindebolzen (16) bewerkstelligt wird, wobei der Gewindeteil des Bolzens (16) in Bohrungen zweier Vorsprünge (17) des schwenkbaren Halteteiles (14) durch die zwischen diesen Vorsprüngen (17) liegende Rändelmutter (16') hin- und herbewegt werden kann und das andere Ende des Bolzens (16) in dem Vorsprung (18) der feststehenden Halte- und Führungsvorrichtung (1') drehbar befestigt ist.

## Claims

1. A hand-held implement for welding webs or sheets of thermoplastic material, comprising a pair of motor-driven pressure rollers (2a, 2b), which on a retaining and guiding device (1') that is S-shaped in cross-section and, if desired, is provided with rollers (25) is mounted in such a manner that one roller (2a) is adapted to be adjusted by means of a pivoted supporting member (14) as regards its distance from the other roller, and a heater (19), which precedes the pair of pressure rollers (2a, 2b), characterized in that the axles (9, 11) of the pressure rollers (2a, 2b) crossing in the area of and being symmetrical about the axis of the welding seam include an angle of 1 to 3 degrees with each other in the plane which is parallel to the webs (3, 4).

2. A welding implement according to claim 1, characterized in that each pressure roller (2a, 2b) has at its periphery at least one groove (2').

3. A welding implement according to claim 1, characterized in that the distance between the rollers is changed by an adjustment of a knurled nut (16') on a screwthreaded bolt (16) the screwthreaded portion of the bolt (16) is adapted to be reciprocated in bores of two projections (17) of the pivoted supporting member (13) by the knurled nut (16'), which is disposed between said protections (17), and the other end of the bolt (16) is rotatably mounted in the projection (18) of the stationary retaining and guiding device (1').

## Revendications

1. Dispositif de soudage sous forme d'un appareil à main pour bandes ou bâches en matière thermoplastique, ce dispositif comportant une paire de rouleaux presseurs (2a, 2b) entraînés par un moteur et montés sur un dispositif de retenue et de guidage (1') à section transversale en S et éventuellement pourvu de galets de roulement (25), de telle sorte qu'un rouleau (2a) puisse être décalé à l'écart de l'autre au moyen d'un élément de retenue pivotant (14), ce dispositif de soudage comportant également un corps chauffant (19) monté devant la paire de rouleaux presseurs (2a, 2b), caractérisé en ce que les axes (9, 11) des rouleaux presseurs (2a, 2b), croisant dans la zone de l'axe médian de la soudure à symétrie par rapport à cet axe, sont décalés l'un par rapport à l'autre d'un angle de 1 à 3°, dans le plan parallèle aux bandes (3, 4).

2. Dispositif de soudage suivant la revendication 1, caractérisé en ce que chaque rouleau presseur (2a, 2b) comporte au moins une rainure (2') sur sa périphérie.

3. Dispositif de soudage suivant la revendication 1, caractérisé en ce que l'écartement des rouleaux est modifié en réglant un écrou moleté (16') sur un boulon fileté (16), la partie filetée de ce boulon (16) pouvant effectuer un mouvement de va-et-vient dans le trou de deux saillies (17) de l'élément de retenue pivotant (14) au moyen de l'écrou moleté (16') situé entre ces saillies (17), tandis que l'autre extrémité du boulon (16) est montée de façon à pouvoir tourner dans sa saillie (18) du dispositif de retenue et de guidage fixe (1').

FIG.1

FIG.2

FIG. 2a

FIG. 5

0 009 015

FIG. 3

FIG.4